# EUROPEAN PATENT SPECIFICATION

(11) **EP 2 423 432 B1**
(45) Date of publication and mention of the grant of the patent: **19.11.2014**
(21) Application number: 11167023.8
(22) Date of filing: 23.05.2011
(51) Int. Cl.: E21D 21/00, F16B 13/08

(54) **Anchoring apparatus and method of use**
Verankerungsvorrichtung und Verfahren zu ihrer Verwendung
Appareil d'ancrage et son procédé d'utilisation

(30) Priority: 25.08.2010 US 376684 P
(43) Date of publication of application: 29.02.2012
(73) Proprietor: Peled, Amir, 42242 Netanya (IL)
(72) Inventor: Peled, Amir, 42242 Netanya (IL)
(74) Representative: Lecomte, Didier

(56) References cited:
- FR-A5- 2 038 851
- US-A1- 2005 123 361

## Description

### FIELD OF THE INVENTION

The present invention generally pertains to an apparatus and method for anchoring devices. More specifically to it relates to an expandable anchor apparatus and a method to use the anchor such that the anchor is anchored in a pre-formed hole.

### BACKGROUND OF THE INVENTION

Anchoring devices for mounting in concrete and other strata have taken on a variety of methods and configurations through the years. Expansion anchors of different types are provided in the prior art. One of these consists of a plastic sleeve having an elongated neck provided with a stop which holds an object at an adjustable distance from a support structure in which the sleeve is mounted. The stop is in form of a nut that can be screwed onto the external thread provided on the neck. The screw which is threaded into the sleeve to expand the same has a head between which and the nut the object to be affixed is held. Moreover, US Patent 6,986,623 discloses an improved mine roof bolt. The mine roof bolt comprises a bolt portion having a camming nut rigidly fixed to it and a threaded end and an expansion shell having a central threaded nut with wedge fingers extending from it. The expansion shell is threaded onto the threaded section of the bolt. Turning the bolt while it is in a hole causes the expansion shell to move along the bolt and brings the wedge fingers into contact with the camming nut, spreading the wedge fingers into contact with the hole sides. As the turning of the bolt continues, the relative movement of the camming nut and wedge fingers increases the wedging effect within the hole until the bolt is anchored in the hole. The anchor of this patent suffers from a critical limitation. This limitation is in the process of the anchoring. In this process, when the bolt is turned inside the wall, the camming nut applies a rotation force of the expansion shell. This force can cause said shell to move and rotate in the hole. This can cause damage to the hole by crumbling its inner walls. Moreover, this can damage the expansion shell itself, and require replacement of the damaged expansion shell with a new expansion shell.

US application 2005/123361 Al discloses an improved mine roof bolt. The mine roof bolt comprises a bolt portion having a camming nut rigidly fixed to it and a threaded end and an expansion shell having a central threaded nut with wedge fingers extending from it. The expansion shell is threaded onto the threaded section of the bolt. Turning the bolt while it is in a hole causes the expansion shell to move along the bolt and brings the wedge fingers into contract with the camming nut, spreading the wedge fingers into contract with the hole sides. As the turning of the bolt continues, the relative movement of the camming nut and wedge fingers increases the wedging effect within the hole until the bolt is anchored in the hole. While turning of the bolt may serve to mix a catalytic adhesive, the adhesive is not needed to activate the mechanical anchoring mechanism of the mine roof bolt.

It is therefore a long felt need to provide an anchoring apparatus which does not rotate while being expanded in the hole. This apparatus has to be easy to use and with a construction that can provide high performance to stand a particular force applied on it while being anchored in the hole. Moreover, it is a long felt need to provide an anchoring device which is independent of the size of the hole in which it is anchored.

### SUMMARY OF THE INVENTION

The present invention discloses an anchor apparatus for insertion into a pre-formed hole in an object of interest for permanent embedment in the hole. The apparatus comprises:
a. A screw pair that comprises: (i) A screw with a screw head and, (ii) A nut.
b. An anchor with a distal part and a proximal part to be received and anchored in the hole. The anchor comprises at least two fixing petals extendable from the outer perimeter of the distal part of the anchor.
c. A pushing tubular member with a distal part and a proximal part. The distal part of the tubular member is adapted to expand the fixing petals of the anchor.

The anchor and the tubular member disposed on the screw with sufficiently loose fit between the screw head and the nut such that the distal part of the tubular member spreads apart the fixing petals of the anchor when the screw head and the nut approach each other.

The proximal part of the tubular member comprises a gripping part adapted for gripping by a user's tool, so that the anchor is prevented from turning around an axis of the screw due to static friction between the tubular member and the petals while the screw head and the nut approach each other.

The present invention also discloses an anchor apparatus, wherein the nut and the distal part of the anchor are interconnected between each other. Further wherein the screw head and the nut approach each while the screw is screwed into the nut.

The present invention also discloses an anchor apparatus, wherein the screw head and the distal part of the anchor and interconnected between each other, further wherein the screw head and the nut approach each while the nut is screwed on the nut.

The present invention also discloses an anchor apparatus, wherein said interconnected is selected from a group consisting of: glued, attached, bound, fastened, soldered, welded or any combination thereof.

The present invention also discloses an anchor apparatus, wherein the object of interest is a wall.

The present invention also discloses an anchor apparatus, wherein the wall is a selected from a group consisting of a concrete wall, a gypsum wall, a block wall, a brick wall, a stone wall, or any combination thereof.

The present invention also discloses an anchor apparatus, the distal part of the tubular member has an approximate shape selected from a group consisting of: a conical shape, a cylindrical shape, a spherical shape, a polygonal shape or any combination thereof.

The present invention also discloses an anchor apparatus, wherein the distal part of the tubular member further comprises sagging guide paths. The guide paths are adapted to cause the fixing petals slide across the length of the distal part of the tubular member.

The present invention also discloses an anchor apparatus, wherein the grasping part has an approximate shape selected from a group consisting of: a conical shape, a cylindrical shape, a polygonal shape or any combination thereof.

The present invention also discloses an anchor apparatus, wherein the tool comprises at least two parts: a stable part for gripping the grasping part of the tubular member, and a rotating part for rotating the screw head.

The present invention also discloses an anchor apparatus, wherein the tool comprises at least two parts: a stable part for gripping the grasping part of the tubular member, and a rotating part for rotating the nut.

The present inventions also discloses an anchor apparatus, wherein the internal sides of the fixing petals and the outside of the distal part of the tubular member are made of materials with a static friction coefficient of between about 0.5 and about 0.8.

The present invention also discloses an anchor apparatus, wherein the fixing petals and the tubular member are made of material selected from a group consisting of: steel, iron, copper, aluminum, plastic or any combination thereof.

The present invention also discloses an anchor apparatus further comprising at least one disc adapted to be positioned on the tubular member and to be disposed on the tubular member between the screw head and the proximal part of the anchor.

The present invention also discloses an anchor apparatus further comprising at least one disc adapted to be positioned on the tubular member and to be disposed on the tubular member between the nut and the proximal part of the anchor.

The present invention also discloses an anchor apparatus, wherein the object of interest is located between the nut and the proximal part of the anchor.

The present invention also discloses an anchor apparatus, wherein the object of interest is located between the screw head and the proximal part of the anchor.

The present invention also discloses an anchor apparatus, wherein the screw or the nut are screwed is by a tool selected from a group consisting of: an adjustable spanner, an extractor, a screwdriver, a plier, a screw tool or any combination thereof.

The present invention also discloses an anchor apparatus, wherein the object of interest is located between the screw head and the proximal part of the anchor.

The present invention also discloses an anchor apparatus, wherein the gripping tool is selected from a group consisting of: an adjustable spanner, a plier, a screw tool or any combination thereof.

The present invention also discloses a method of using an anchor apparatus. The method comprises:
a. Providing an anchor apparatus for insertion into a pre-formed hole in an object of interest for permanent embedment in the hole, comprising:
   i. Screw pair comprising: (I) A screw with a screw head and, (II) A nut.
   ii. An anchor with a distal part and a proximal part to be received and anchored in the hole, the anchor comprises at least two fixing petals extendable from the outer perimeter of the distal part of the anchor.
   iii. A pushing tubular member with a distal part and a proximal part, the distal part of the tubular member adapted to expand the fixing petals of the anchor.

The anchor and the tubular member disposed on the screw with sufficiently loose fit between the screw head and the nut such that the distal part of the tubular member spreads apart the fixing petals of the anchor when the screw head and the nut approach each other. The proximal part of the tubular member comprises a gripping part adapted for gripping by a user's tool, so that the anchor is prevented from turning around an axis of the screw due to static friction between the tubular member and the petals while the screw head and the nut approach each other.
b. Forming a hole in the object of interest.
c. Disposing the anchor and the tubular member on the screw such that the screw head is proximate to the proximal part of the tubular member.
d. Screwing the nut on the screw such that the nut and the distal part of the anchor are proximate to each other.
e. Verifying that the nut and the distal part of the anchor are proximate to each other, verifying that the screw head and the proximal part of the tubular member are proximate to each other and verifying that the distal part of the tubular member and the fixing petals of the anchor are proximate to each other.
f. Locating the anchor apparatus in the hole.
g. Screwing the screw into the nut by rotating the screw head while gripping the gripping part by the user's tool.
h. Spreading apart the fixing petals of the anchor such that the petals are at least partially proximate the walls of the hole and thereby anchoring the anchor in the wall.

The present invention also discloses a method of using an anchor apparatus. The method comprises:
a. Providing an anchor apparatus for insertion into a pre-formed hole in an object of interest for permanent embedment in the hole, comprising:
   i. Screw pair comprising: (I) A screw with a screw head and, (II) A nut.
   ii. An anchor with a distal part and a proximal part to be received and anchored in the hole, the anchor comprises at least two fixing petals extendable from the outer perimeter of the distal part of the anchor.
   iii. A pushing tubular member with a distal part and a proximal part, the distal part of the tubular member adapted to expand the fixing petals of the anchor.

The anchor and the tubular member disposed on the screw with sufficiently loose fit between the screw head and the nut such that the distal part of the tubular member spreads apart the fixing petals of the anchor when the screw head and the nut approach each other. The proximal part of the tubular member comprises a gripping part adapted for gripping by a user's tool, so that the anchor is prevented from turning around an axis of the screw due to static friction between the tubular member and the petals while the screw head and the nut approach each other.
b. Forming a hole in the object of interest.
c. Disposing the anchor and the tubular member on the screw such that the screw head is proximate to the distal part of the anchor.
d. Screwing the nut on the screw such that the nut and the proximal part of the tubular member are proximate to each other.
e. Verifying that the nut and the proximal part of the tubular member are proximate to each other, verifying that the screw head and the distal part of the anchor are proximate to each other and verifying that the distal part of the tubular member and the fixing petals of the anchor are proximate to each other.
f. Locating the anchor apparatus in the hole.
g. Screwing the nut on the screw by rotating the nut while gripping the gripping part by the user's tool.
h. Spreading apart the fixing petals of the anchor such that the petals are at least partially proximate the walls of the hole and thereby anchoring the anchor in the wall.

The present invention also discloses a method of using an anchor apparatus which comprises an additional step of interconnecting the nut and the distal part of the anchor.

The present invention also discloses a method of using an anchor apparatus which comprises an additional step of interconnecting the screw head and the distal part of the anchor.

The present invention also discloses a method of using an anchor apparatus, wherein the step of interconnecting is selected from a group consisting of: gluing, attaching, bounding, fastening, soldering, welding or any combination thereof.

The present invention discloses an anchor apparatus for insertion into a pre-formed hole in an object of interest for permanent embedment in the hole. The apparatus comprises:
a. A screw pair that comprises: (i) A screw with a screw head and, (ii) A nut.
b. An anchor with a distal part and a proximal part to be received and anchored in the hole. The anchor comprises at least two fixing petals extendable from the outer perimeter of the distal part of the anchor.
c. A pushing tubular member with a distal part and a proximal part. The distal part of the tubular member is adapted to expand the fixing petals of the anchor.

The anchor and the tubular member disposed on the screw with sufficiently loose fit between the screw head and the nut such that the distal part of the tubular member spreads apart the fixing petals of the anchor when the screw head and the nut approach each other.

The proximal part of the tubular member comprises a gripping part adapted for gripping by a user's tool, so that the anchor is prevented from turning around an axis of the screw due to static friction between the tubular member and the petals which is greater than the static friction between the nut and the screw, while the screw head and the nut approach each other.

The present invention discloses an anchor apparatus for insertion into a pre-formed hole in an object of interest for permanent embedment in the hole. The apparatus comprises:
a. A screw pair that comprises: (i) A screw with a screw head and, (ii) A nut.
b. An anchor with a distal part and a proximal part to be received and anchored in the hole. The anchor comprises at least two fixing petals extendable from the outer perimeter of the distal part of the anchor.
c. A pushing tubular member with a distal part and a proximal part. The distal part of the tubular member is adapted to expand the fixing petals of the anchor.

The anchor and the tubular member disposed on the screw with sufficiently loose fit between the screw head and the nut such that the distal part of the tubular member spreads apart the fixing petals of the anchor when the screw head and the nut approach each other. The proximal part of the tubular member comprises a gripping part adapted for gripping by a user's tool, so that the anchor is prevented from turning around an axis of the screw due to static friction between the tubular member and the petals while the screw head and the nut approach each other.

The expansion of the anchor does not depend on the inner walls of the hole as the anchor does not rotate while being expended inside said hole. The initial diameter of the hole can be greater than the initial diameter of the anchor.

The present invention also discloses an anchor apparatus insertable into a pre-formed hole in an object of interest for permanent fixation in said hole. The aforesaid apparatus comprises (a) a rotatable screw provided with a head grippable by a user's screw key; and (b) fixating means. The fixating means comprises a pair of extendable anchors including distal and proximal anchors. The anchors are loosely put onto said screw. The distal anchor is provided with a portion grippable by an user's key. The proximal anchor is provided with a portion threadably connected to said screw. The petals are provided with bevels at terminals thereof. Each anchor has a portion provided with an equal number of extendable petal-shaped members. The petal-shaped portions are face-to-face oriented along to said screw. The petal shaped members are provided with internal and outer bevels at terminals thereof. The petal shaped members belonging to each anchor provided with said internal and outer bevels in an alternate manner. The anchors are angularly oriented such that bevels of petal shaped members disposed contrariwise each other have opposite bevels. The rotatable screw is adapted for tying up said anchors such that said petal shaped members having said outside bevels are inserted under said petal shaped members having internal bevels and force said members having internal bevels to spread out aside.

The present invention also discloses a method of using an anchor apparatus. The aforesaid method comprise the steps of: (a) (a) providing an anchor apparatus insertable into a pre-formed hole in an object of interest for permanent fixation in said hole, said apparatus comprising (i) a rotatable screw provided with a head grippable by a user's screw key; and (ii) fixating means; (b) said apparatus further comprises a pair of extendable anchors including distal and proximal anchors; said anchors loosely put onto said screw; said distal anchor provided with a portion grippable by an user's key; said proximal anchor provided with a portion threadably connected to said screw; said petals provided with bevels at terminals thereof; each anchor having a portion provided with an equal number of extendable petal-shaped members; said portions are face-to-face oriented along to said screw; said petal shaped members are provided with internal and outer bevels at terminals thereof; said petal shaped members belonging to each anchor provided with said internal and outer bevels in an alternate manner; said anchors are angularly oriented such that bevels of petal shaped members disposed contrariwise each other have opposite bevels; said rotatable screw is adapted for tying up said anchors such that said petal shaped members having said outside bevels are inserted under said petal shaped members having internal bevels and force said members having internal bevels to spread out aside; (b) inserting said apparatus into said preformed hole in an object of interest; and (c) (b) fixating said apparatus within said hole by means of rotating said screw.
wherein said step of fixating said apparatus within said hole further comprises a step of tying up said fixating means comprising a pair of extendable anchors including distal and proximal anchors; said anchors are loosely put onto said screw; said distal anchor is gripped by an user's key; said proximal anchor is threadably connected to said screw; said petals are provided with bevels at terminals thereof; each anchor has a portion provided with an equal number of extendable petal-shaped members; said portions are face-to-face oriented along to said screw; said petal shaped members are provided with internal and outer bevels at terminals thereof; said petal shaped members belonging to each anchor provided with said internal and outer bevels in an alternate manner; said anchors are angularly oriented such that bevels of petal shaped members disposed contrariwise each other have opposite bevels; said petal shaped members having said outside bevels are inserted under said petal shaped members having internal bevels and force said members having internal bevels to spread out aside.

### BRIEF DESCRIPTION OF THE FIGURES

In order to better understand the invention and its implementation in a practice, a plurality of embodiments will now be described, by way of non-limiting example only, with reference to the accompanying drawings, in which
Fig. 1 illustrates the components of the anchor apparatus of the present invention;
Fig. 2 illustrates the anchor apparatus in a first specific embodiment;
Fig. 3 illustrates the anchor apparatus in a second specific embodiment;
Fig. 4 illustrates the anchor apparatus of the first specific embodiment anchored in a hole in the wall;
Fig. 5 illustrates the anchor apparatus of the second specific embodiment anchored in a hole in the wall;
Fig. 6 illustrates the anchor apparatus of the third specific embodiment in the closed position;
Fig. 7 illustrates the anchor apparatus of the third specific embodiment in the open position;
Figs 8a and 8b illustrate interaction of the petal members belonging to different anchors; and
Fig. 9 illustrates the anchor apparatus provided with the collar.

### DETAILED DESCRIPTION OF THE PREFERRED EMBODIMENTS

The present invention can be understood more readily by reference to the following detailed description, examples, drawings, and claims, and their previous and following description. However, before the present devices, systems, and/or methods are disclosed and described, it is to be understood that this invention is not limited to the specific devices, systems, and/or methods disclosed unless otherwise specified, as such can, of course, vary. It is also to be understood that the terminology used herein is for the purpose of describing particular aspects only and is not intended to be limiting.

The following description of the invention is provided as an enabling teaching of the invention in its best, currently known embodiment. To this end, those skilled in the relevant art will recognize and appreciate that many changes can be made to the various aspects of the invention described herein, while still obtaining the beneficial results of the present invention. It will also be apparent that some of the desired benefits of the present invention can be obtained by selecting some of the features of the present invention without utilizing other features. Accordingly, those who work in the art will recognize that many modifications and adaptations to the present invention are possible and can even be desirable in certain circumstances and are a part of the present invention. Thus, the following description is provided as illustrative of the principles of the present invention and not in limitation thereof.

The present invention may be understood more readily by reference to the following detailed description of preferred embodiments of the invention and the examples included therein and to the Figures and their previous and following description.

The term 'bevel' hereinafter refers to a surface which is not perpendicular to the faces of the piece.

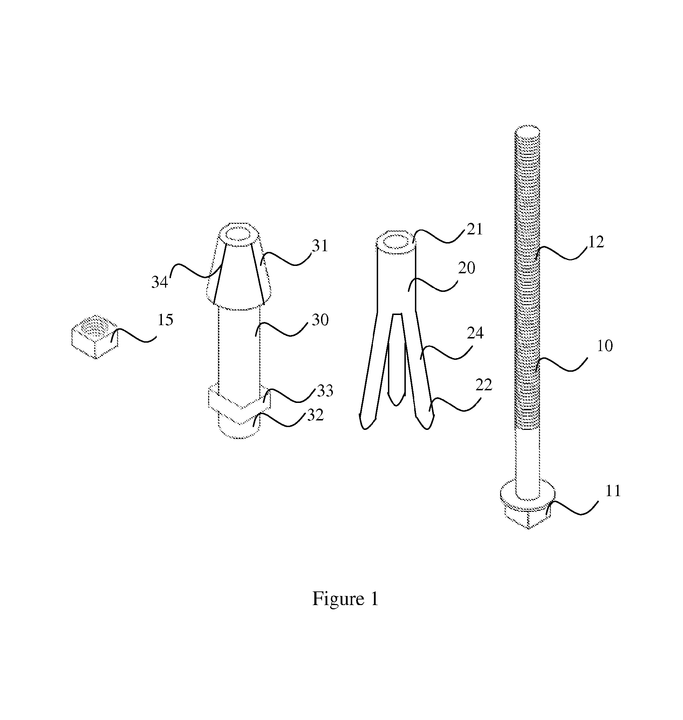

Reference is made now to Fig. 1 where illustrated one aspect of the anchor apparatus of the present invention for insertion into a pre-formed hole in an object of interest for permanent embedment in the hole. In this figure illustrated screw **10** with a screw head **11** and a thread **12.** The nut **15** is adapted to be threaded on the thread **12** of screw **10.** The Anchor **20** with a distal part **21** and a proximal part **22** is provided to be received and anchored in the hole. In a specific embodiment of the present invention, anchor **20** comprises three fixing petals **24** extendable from the outer perimeter of the distal part **21** of anchor **20**. Pushing tubular member **30** comprises a distal part **31**, a proximal part **32** and a gripping part **33**. The distal part of the tubular member **30** adapted to expand the fixing petals **24** of the anchor **20.** According to a specific embodiment of the present invention, the distal part **31** of the tubular member **30** has a conical outer shape. Moreover, the distal part **31** of the tubular member **30** further comprises sagging guide paths **34**. The guide paths **34** are adapted to cause the fixing petals **24** slide across the length of the distal part **31** of the tubular member **30.** The anchor **20** and the tubular member **30** are adapted to be disposed on the screw **10** sufficiently loose fit. According to a specific embodiment of the invention, the internal part of the anchor **20** and the tubular member **30** are not threaded. The dimensions of the element present in the Figures of the present invention are not limited, and can vary according to a specific embodiment of the present invention. For example, the length of the screw can be much greater.

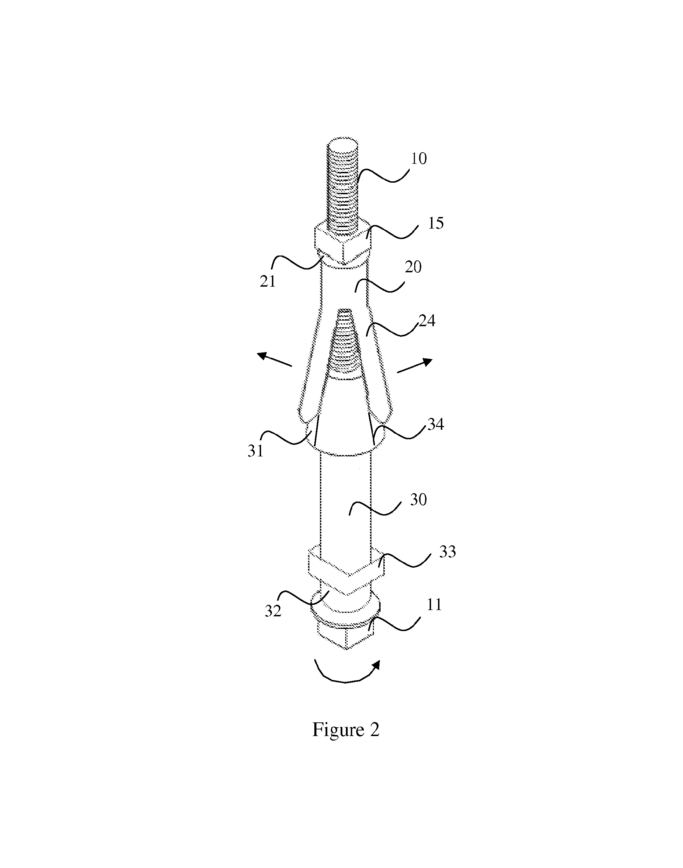

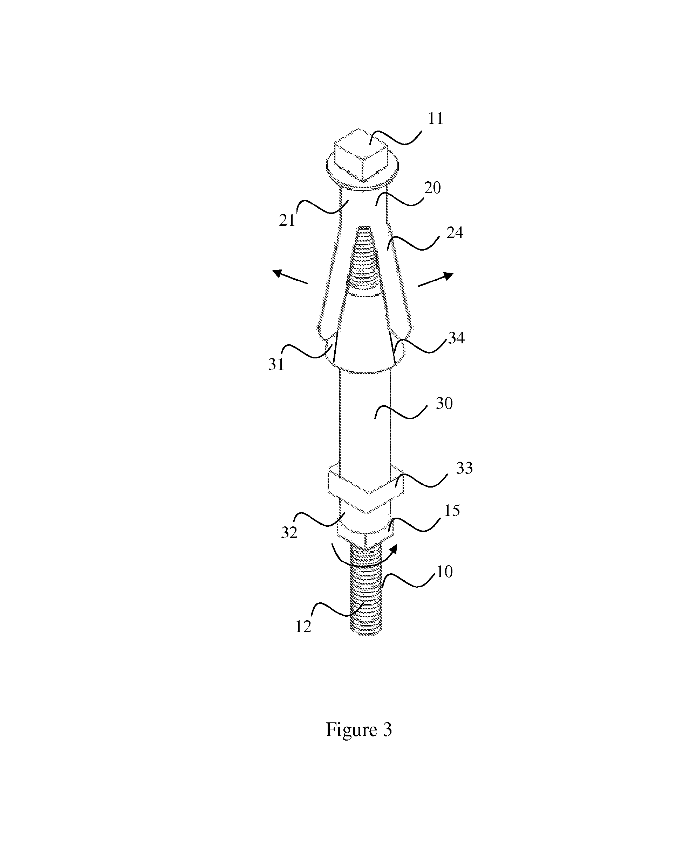

The anchor **20** and the tubular member **30** are adapted to be disposed on the screw **10** in the two configurations presented in Fig. 2 and Fig. 3. In these two configurations, the anchor **20** and the tubular member **30** are disposed between the screw head **11** and the nut **15** such that the distal part **31** of the tubular member **30** and the fixing petals **24** of the anchor **20** are proximate to each other. In these two configurations, the distal part **31** of the tubular member **30** spreads apart the fixing petals **24** of said anchor **20** when the screw head **11** and the nut **15** approach each other.

Reference is made now to Fig. 2 where illustrated one configuration of the anchor apparatus. In this configuration, anchor **20** and tubular member **30** are disposed on the screw **10**. In this specific configuration, the distal part **21** of the anchor **20** and nut **15** are interconnected by soldering means, the screw head **11** and the proximal part **32** of the tubular member **30** are proximate to each other and the distal part **31** of the tubular member **30** and the fixing petals **24** of the anchor **20** are proximate to each other.

Anchor **20** of this specific embodiment is expandable by the following method: The gripping part **33** is held by a gripping tool, for example, an adjustable spanner, while a screwing tool, for example, a plier rotates screw head **11** of screw **10**. A nut **15** is mechanically connected to the anchor **20** in a fixated manner. Due to static friction between the distal part **31** of the tubular member **30** and the fixing petals **24**, which is greater than the friction between nut **15** and thread **12**, thread **12** is rotated and threaded into nut **15,** while nut **15**, anchor **20** and tubular member **30** do not rotate when gripping part **33** is held by said gripping tool, and screw **10** is rotated. Thereby, nut **15** and screw head **11** approach each other, and anchor **20** approaches tubular member **30**. While anchor **20** approaches tubular member **30**, fixing petals **24** slide across the length of the distal part **31** of the tubular member **30**, fixing petals **24** spread apart, and anchor **20** is anchored in said hole.

Reference is made now to Fig. 3 where illustrated a second configuration of the anchor apparatus. In this configuration, anchor **20** and tubular member **30** are mechanically connected to the screw **10** in a fixated manner. In this specific configuration, the distal part **21** of the anchor **20** and screw head **11** are interconnected by soldering means, the nut **15** and the proximal part **32** of the tubular member **30** are proximate to each other and the distal part **31** of the tubular member **30** and the fixing petals **24** of the anchor **20** are proximate to each other.

Anchor **20** of this specific embodiment is expandable by the following method: The gripping part **33** is held by a gripping tool, for example, an adjustable spanner, while a screwing tool, for example, a plier rotates nut **15**. Due to static friction between the distal part **31** of the tubular member **30** and the fixing petals **24**, which is greater than the friction between nut **15** and thread **12**, nut **15** is rotated and threaded on thread **12**, while screw **10**, anchor **20** and tubular member **30** do not rotate when gripping part **33** is held by said gripping tool. Thereby, nut **15** and screw head **11** approach each other, and anchor **20** approaches tubular member **30**. While anchor **20** approaches tubular member **30**, fixing petals **24** slide across the length of the distal part **31** of the tubular member **30,** fixing petals **24** spread apart, and anchor **20** is anchored in the hole.

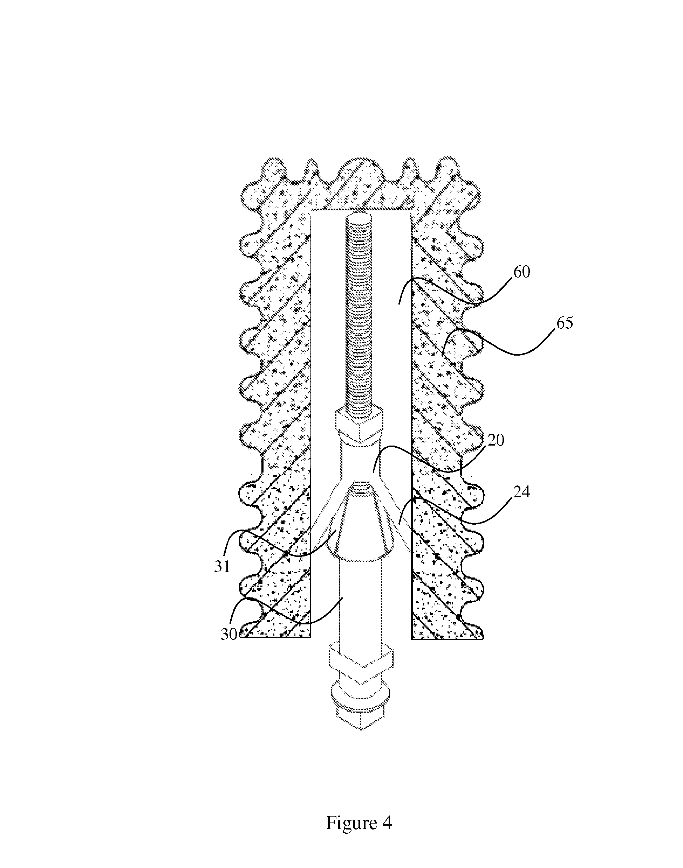

Reference is made now to Fig. 4 where illustrated a hole **60** in the wall **65**, and the anchor **20** of Fig.2 anchored and fixed in said hole. In this Figure, fixing petals **24** are spread apart and are under high pressure of the wall **65** from one side, and the distal part **31** of the tubular member **30** from the other side.

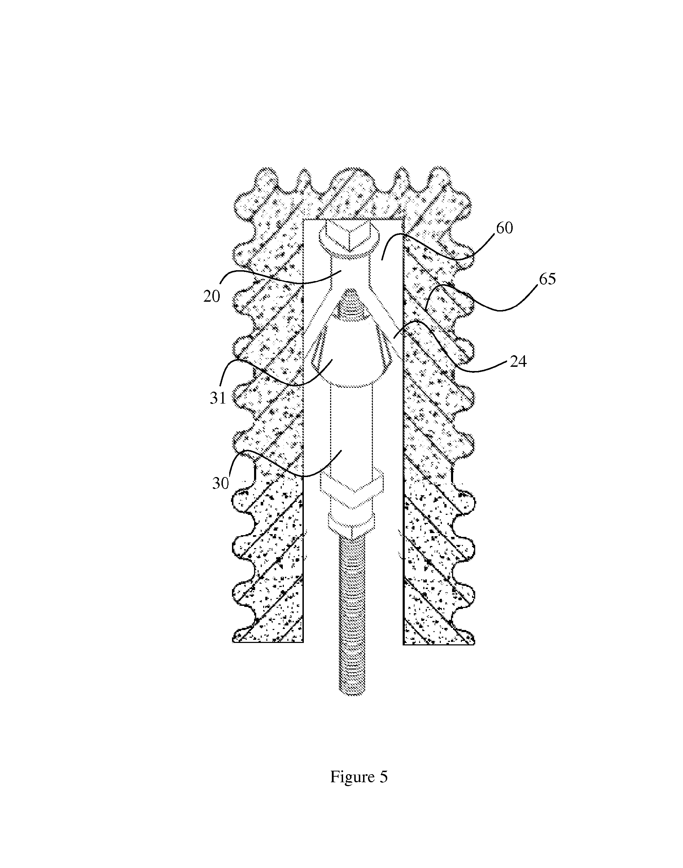

Reference is made now to Fig. 5 where illustrated a hole **60** in the wall **65**, and the anchor **20** of Fig.3 anchored and fixed in said hole. In this Figure, fixing petals **24** are spread apart and are under high pressure of the wall **65** from one side, and the distal part **31** of the tubular member **30** from the other side.

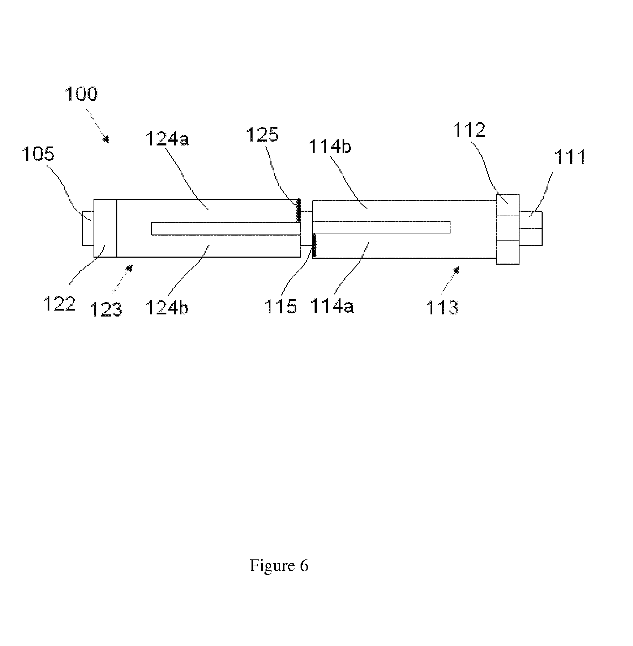

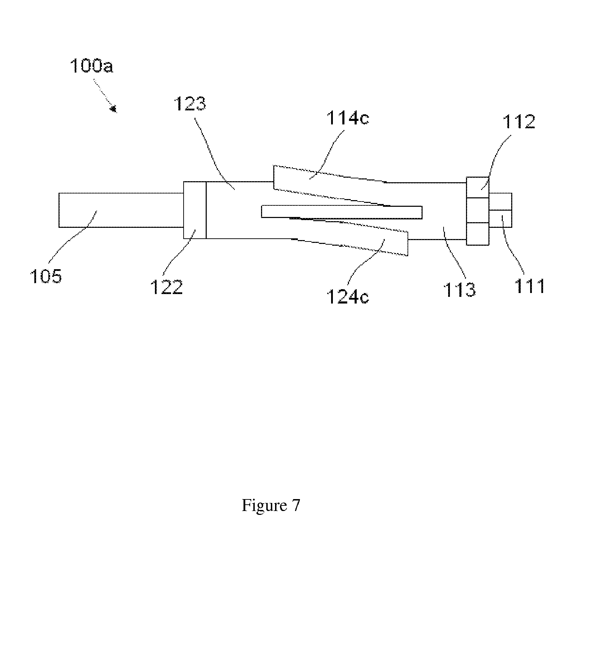

Reference is now made to Figs 6 and 7, presenting an alternative embodiment 100/100a of the current invention in closed and open positions, respectively. The anchoring device 100 comprises a screw 105 provided with a head 111 configured for gripping by a user's key (not shown) and a pair of a distal anchor 113 and proximal anchor 123 loosely put on the screw 105. The distal anchor 113 is provided with a portion 112 configured for gripping by a user's key (not shown).The proximal anchor is provided with a portion 122 which is threadably connected thereto. The anchor 113 comprises petal shaped members 114a and 114b. The anchor 123 comprises petal shaped members 124a and 124b. The petal members 114a and 124a are provided with an outer face 115. The petal members 114b and 124b are provided with an internal face 116 (not shown). The anchoring device 100 is inserted into the preformed hole (not shown). The user rotates the head 111 of the screw 105 by one key (not shown). Concurrently with this action, the user keeps the head 112 fixed by another key (not shown). The screw 105 ties the anchors 113 and 123. The petal members 114a and 124a having the outer bevel are inserted under the petal members 124b and 114b, respectively. The aforesaid petal members 124b and 114b are deployed aside into positions 124c and 114c, respectively (see Fig. 7). The concept of the current embodiment is similar to previously disclosed but provides more liable fixation in the hole.

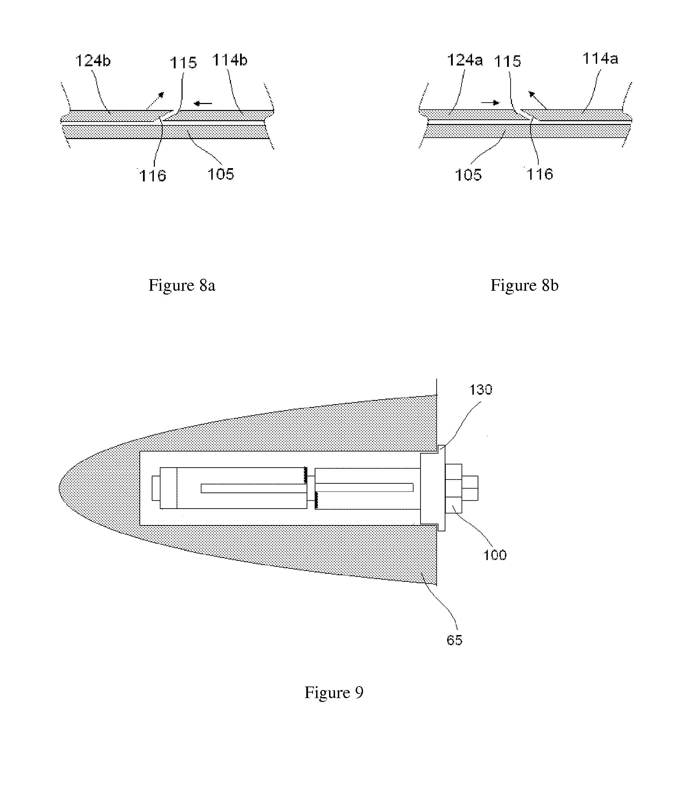

Reference is now made to Figs 8a and 8b, depicting interaction of petal members during tying the anchors 113 and 123. In both cases, the internal bevel 116 slides over the outer bevel 115. The petal members 114a and 124a are forced to be deployed aside.

Reference is now made to Fig. 9, presenting the anchoring apparatus 100 provided with a collar 130. The aforesaid collar is designed to center the anchoring apparatus 100 or similar in the hole 65.

The main effect achieved by the method described above is that anchor does not rotate in said hole while screw is screwed into the anchor. The effect is highly important for proper and stable anchoring of the anchor in the hole. Moreover, the effect is highly useful in cases in which the walls of the hole can be crumbled if an anchor rotates inside the wall during the process anchoring. This undesirable rotation can enlarge the hole, and even damage the hole making it inappropriate for installation of the anchor. The anchor of the present invention does not depend on the hole, means the anchor of the present invention does not use the walls of the hole in order not to turn inside the wall during the anchoring. This advantage over the anchors known in the prior art is critical, in many cases, for proper installation of the anchor in the hole. During the anchoring of the anchors known in the prior art, it also a common event when the anchor is damaged after being rotated inside the hole during the anchoring. The advantage of the anchor of the present described above prevents the damages that can be caused to the anchor during the anchoring process.

Moreover, the anchor apparatus of the present invention is independent of the size of the hole in which it is anchored. That means that the pre-formed hole can be wider than the diameter of the anchor. During the process of the expansion, the anchor will adapt itself to the size of the hole.

Therefore, the present invention comprises two novel elements which can be regarded an inventive step in the field of the invention: (a) The anchor does not rotate during the anchoring process. (b) The size of the hole in which the anchor is going to be installed can be larger than the diameter of the anchor. These two elements do not characterize the anchor of US patent 6,986,623.

## Claims

1. An anchor apparatus for insertion into a pre-formed hole (60) in an object of interest for permanent embedment in the hole, comprising:
a. a screw pair comprising a screw (10) with a screw head (11) and a nut (15) threadly interconnected therebetween;
b. an anchor (20) with a distal part (21) and a proximal part (22) to be received and anchored in said hole (60), said anchor (20) comprising at least two fixing petals (24) extendable from the outer perimeter of said distal part (21) of said anchor (20); and,
c. a pushing tubular member (30) with a distal part (31) and a proximal part (32), said distal part (31) of said tubular member adapted to expand said fixing petals (24) of said anchor (20);
said anchor (20) and said tubular member (30) disposed on said screw (10) with sufficiently loose fit between said screw head (11) and said nut (15) such that said distal part (31) of said tubular member (30) spreads apart said fixing petals (24) of said anchor (20) when said screw head (15) and said nut (15) approach each other;
said proximal part (32) of said tubular member (30) **characterized by** a gripping part (33) adapted for gripping by a user's tool, so that said anchor (20) is prevented from turning around an axis of said screw (10) due to static friction between said tubular member (30) and said petals (24) while said screw head (11) and said nut (15) threadly approach each other.

2. The anchor apparatus of claim 1,
wherein said internal side of said fixing petals (24) and outside of said distal part (31) of said tubular member (30) are made of materials with a static friction coefficient of between about 0.5 and about 0.8.

3. The anchor apparatus of claim 1,
wherein said static friction between said tubular member (30) and said petals (24) is greater than the static friction between said nut (15) and said screw (10), while said screw head (11) and said nut (15) threadly approach each other.

4. The anchor apparatus of claim 1,
further provided with a centering collar (130).

## Patentansprüche

1. Verankerungsvorrichtung zum Einsetzen in ein vorgeformtes Loch (60) in einem gewünschten Gegenstand zur permanenten Einbettung in dem Loch, umfassend:
a. ein Schraubenpaar, umfassend eine Schraube (10) mit einem Schraubenkopf (11) und eine damit mittels Gewinde verbundene Mutter (15);
b. einen Anker (20) mit einem distalen Teil (21) und einem proximalen Teil (22) zur Aufnahme und Verankerung in dem Loch (60), wobei der Anker (20) mindestens zwei Befestigungs-Spreizblätter (24) umfasst, die vom Außendurchmesser des distalen Teils (21) des Ankers (20) ausdehnbar sind; und
c. ein röhrenförmiges Andrückelement (30) mit einem distalen Teil (31) und einem proximalen Teil (32), wobei der distale Teil (31) des röhrenförmigen Elements zum Ausdehnen der Befestigungs-Spreizblätter (24) des Ankers (20) eingerichtet ist;
wobei der Anker (20) und das röhrenförmige Element (30) mit ausreichend lockerer Passung zwischen dem Schraubenkopf (11) und der Mutter (15) auf der Schraube (10) angeordnet sind, sodass der distale Teil (31) des röhrenförmigen Teils (30) die Befestigungs-Spreizblätter (24) des Ankers (20) aufspreizt, wenn sich der Schraubenkopf (15) und die Mutter (15) einander nähern;
wobei der proximale Teil (32) des röhrenförmigen Elements (30) durch ein Greifteil (33) gekennzeichnet ist, das zum Ergreifen durch ein Werkzeug eines Benutzers eingerichtet ist, sodass der Anker (20) aufgrund statischer Reibung zwischen dem röhrenförmigen Element (30) und den Spreizblättern (24) daran gehindert wird, sich um eine Achse der Schraube (10) zu drehen, während der Schraubenkopf (11) und die Mutter (15) sich mittels Gewinde einander nähern.

2. Verankerungsvorrichtung nach Anspruch 1,
wobei die innere Seite der Befestigungs-Spreizblätter (24) und die Außenseite des distalen Teils (31) des röhrenförmigen Elements (30) aus Materialien mit einem statischen Reibungskoeffizienten von zwischen ungefähr 0,5 und ungefähr 0,8 hergestellt sind.

3. Verankerungsvorrichtung nach Anspruch 1,
wobei die statische Reibung zwischen dem röhrenförmigen Element (30) und den Spreizblättern (24) größer ist als die statische Reibung zwischen der Mutter (15) und der Schraube (10), während der Schraubenkopf (11) und die Mutter (15) sich mittels Gewinde einander nähern.

4. Verankerungsvorrichtung nach Anspruch 1,
weiter mit einem Zentrierbund (130) versehen.

## Revendications

1. Appareil d'ancrage destiné à venir s'insérer dans un trou préformé (60) dans un objet d'intérêt à des fins d'encastrement permanent dans le trou, comprenant :
a. une paire de vis comprenant une vis (10) avec une tête de vis (11) et un écrou (15) relié entre elles par filet de vis ;
b. une ancre (20) avec une partie distale (21) et une partie proximale (22) pour venir s'insérer et s'ancrer dans ledit trou (60), ladite ancre (20) comprenant au moins deux pétales de fixation (24) aptes à se déployer à partir du périmètre externe de ladite partie distale (21) de ladite ancre (20) ; et
c. un membre tubulaire de poussée (30) avec une partie distale (31) et une partie proximale (32), ladite partie distale (31) dudit membre tubulaire étant conçue pour déployer lesdits pétales de fixation (24) de ladite ancre (20) ;
ladite ancre (20) et ledit membre tubulaire (30) étant disposés sur la dite vis (10) avec un ajustement suffisamment libre entre ladite tête de vis (11) et ledit écrou (15) de telle sorte que ladite partie distale (31) dudit membre tubulaire (30) déploie lesdits pétales de fixation (24) de ladite ancre (20) lorsque ladite tête de vis (11) et ledit écrou (15) se rapprochent l'un de l'autre ;
ladite partie proximale (32) dudit membre tubulaire (30) étant **caractérisée par** une partie de préhension (33) conçue pour être saisie par un instrument d'utilisateur, de telle sorte que l'on empêche ladite ancre (20) d'effectuer des rotations autour d'un axe de ladite vis (10) via la friction statique entre ledit membre tubulaire (30) et lesdits pétales (24), tandis que ladite tête de vis (11) et ledit écrou (15) se rapprochent l'un de l'autre par filet de vis.

2. Appareil d'ancrage selon la revendication 1, dans lequel ledit côté interne desdits pétales de fixation (24) et le côté externe de ladite partie distale (31) dudit membre tubulaire (30) sont réalisés avec des matières dont le coefficient de friction statique se situe entre environ 0,5 et environ 0,8.

3. Appareil d'ancrage selon la revendication 1, dans lequel ladite friction statique entre ledit membre tubulaire (30) et lesdits pétales (24) est supérieure à la friction statique entre ledit écrou (15) et ladite vis (10), tandis que ladite tête de vis (11) et ledit écrou (15) se rapprochent l'un de l'autre par filet de vis.

4. Appareil d'ancrage selon la revendication 1, muni en outre d'un collier de centrage (130).
